# EUROPEAN PATENT APPLICATION

(11) **EP 0 810 754 A1**
(43) Date of publication of application: **03.12.1997**
(21) Application number: 97303525.6
(22) Date of filing: 23.05.1997
(51) Int. Cl.: H04L 9/08, H04Q 7/38

(54) **Secure communication**

(30) Priority: 31.05.1996 GB 9611411
(71) Applicant: ICO Services Ltd., London W6 9BN (GB)
(72) Inventor: Johnston, Thomas Francis, London, W2 6DG (GB)
(74) Representative: Read, Matthew Charles

(57) **Abstract**

A method of distributing through a communications network enciphering keys for a secure communications session via said network between first and second terminals (2a,2b) corresponding first and second terminal keys (Kₐ,K_{b}) comprising:
storing said first and second terminal keys (Kₐ,K_{b}) remotely to said terminals (2a,2b);
providing a number (RAND);
generating first and second corresponding partial keys (Kₚₐ,K_{pb}) each comprising a corresponding function of said number (RAND) and a corresponding one of said terminal keys (Kₐ,K_{b}) ; and
dispatching the first partial key (Kₐ) towards the second terminal (2b), and vice-versa.

## Description

This invention relates to a method and apparatus for secure communications.

Digital mobile voice communications systems are known. One example is the GSM terrestrial cellular system; others are the Inmarsat-M satellite telephone system, the IRIDIUM (TM) satellite cellular system (described in, for example, EP-A-0365885), the ICO (TM) satellite cellular system (described in, for example, GB-A-2295296) or the ODYSSEY (TM) satellite cellular system (described in, for example, EP-A-0510789).

Since such systems operate over a wireless link, there is a risk of interception of calls by unauthorised persons.

The GSM system includes an optional encryption scheme described in, for example, "Security aspects and the implementation in the GSM-system"; Peter C.J. van der Arend, paper 4a, Conference Proceedings of the Digital Cellular Radio Conference (DCRC), October 12th-14th 1988, published by Deutsche Bundespost, France Telecom and Fernuniversitate. Greater detail is given in the following GSM recommendations:

GSM 02.09 "Security Aspects"; GSM 03.20 "Security Related Network Functions"; GSM 03.21 "Security Related Algorithms".

In this scheme, a database known as the Authentication Centre (AuC) holds an individual encryption key number (Kᵢ) for each subscriber to the authentication service, which is also stored on a chip known as the Subscriber Information Module (SIM) held in the subscriber's mobile terminal. The subscriber has no access to the data stored in the SIM and cannot read the key.

Where a secure session is requested, a random number (RAND) is generated by the Authentication Centre and used, together with the customer's key (Kᵢ), to calculate a ciphering key (K_{c}) used during the session for ciphering and deciphering messages to/from the subscriber.

The random number is sent to the subscriber's mobile terminal via the Base Transceiver Station (BTS). The mobile terminal passes the random number to the SIM, which calculates the ciphering key K_{c} using an algorithm termed A5.

Thus, the random number is sent over the air, but not the customer's key Kᵢ or the ciphering key K_{c}.

The random number and the ciphering key K_{c} are sent to the Home Location Register (HLR) database storing details for the subscriber concerned and are also sent to the Visiting Location Register (VLR) for the area where the use is currently located, and are supplied to the BTS via which the mobile is communicating.

The ciphering key K_{c} is used, together with the current TDMA frame number, to implement the A5 ciphering algorithm in the mobile terminal and the Base Transceiver Station. Thus, the individual user key Kᵢ is stored only at the authentication centre and the SIM, where the ciphering key K_{c} is calculated and forwarded to the BTS and the mobile terminal.

Whilst this scheme is adequate in many respects, it fails to provide complete security since it offers protection only over the air transmission path. Thus, it is possible for illicit access to be obtained by tampering with the fixed part of the network.

Accordingly, the present invention provides a mobile communications system utilising end-to-end encryption. Because the encryption runs from one user terminal to the other, across the whole communications path and not just the air path, improved privacy is obtained.

The basic problem in offering end-to-end encipherment of communications over a network is in providing each of the two users with the same, or each other's, secret key.

In some applications, a group of terminals (for example all owned by a single body) may all have access to the same key. Whilst this provides privacy against personnel from outside the group, it is an incomplete solution since it does not provide privacy for communication between two terminals within the group and a third within the group.

It is possible to employ public key encryption systems, in which each terminal has a secret decryption key and a non-secret encryption key, so that any other party can use the encryption key to encrypt data but only the recipient can decrypt data which has been encrypted using the public encryption key.

A communication system could be envisaged in which every user is provided with such a pair of keys, and in setting up a communication between a pair of users each sends the other its encryption key whilst keeping its decryption key secret.

However, there is widespread public concern that the use of such techniques on a telecommunications network would allow criminals or terrorists to communicate using completely secure communications, free from any possibility of supervision.

Accordingly, aspects of the present invention may provide of a "trusted third party" database holding copies of the keys, and distributing to each terminal key data relevant to the key of the other terminal.

Preferably, the key data sent to each terminal is masked, to prevent its interception by an eavesdropper and very preferably, even the receiving terminal is unable to extract or recover the key of the terminal. Instead, in a preferred embodiment, each terminal constructs a key dependent jointly upon its own key and the key data received in relation to the other terminal.

In a preferred embodiment, the masking takes the form of processing each terminal key together with a number (the number being the same for each terminal key) using a function so that, although neither terminal can extract the other terminal's key, each can construct the same combination of the two keys and the number as an enciphering key.

The invention is envisaged for use in satellite mobile digital communications systems, and is also useful in corresponding terrestrial digital mobile communication systems (e.g. in cellular systems such as the GSM system), or in fixed link communication systems. The invention may also be practised in store-and-forward communication systems such as e-mail or the Internet.

Aspects of the invention and preferred embodiments thereof are described in the claims and the following description.

### BRIEF DESCRIPTION OF THE DRAWINGS

Embodiments of the invention will now be described, by way of example only, with reference to the accompanying drawings, in which:
Figure 1 is a block diagram showing schematically the elements of a communications system embodying the present invention;
Figure 2 is a block diagram showing schematically the elements of mobile terminal equipment suitable for use with the present invention;
Figure 3 is a block diagram showing schematically the elements of an Earth station node forming part of the embodiment of Figure 1;
Figure 4 is a block diagram showing schematically the elements of a gateway station forming part of the embodiment of Figure 1;
Figure 5 is a block diagram showing schematically the elements of a database station forming part of the embodiment of Figure 1;
Figure 6 illustrates the contents of a store forming part of the database station of Figure 5;
Figure 7a illustrates schematically the beams produced by a satellite in the embodiment of Figure 1;
Figure 7b illustrates schematically the disposition of satellites forming part of Figure 1 in orbits around the earth;
Figure 8 is a block diagram showing the signal flow between components of the handset of Figure 2 in a first embodiment of the invention;
Figure 9 is a schematic block diagram showing the flow of encryption data and signals between the components of Figure 1 in the first embodiment;
Figure 10a is a flow diagram showing schematically the process performed by the control and enciphering components of the handset of Figure 8 in the first embodiment;
Figure 10b is a flow diagram showing schematically the process of operation of the earth station of Figure 3 in the first embodiment;
Figure 10c is a flow diagram showing schematically the process of operation of the central database station of Figure 4 in the first embodiment;
Figure 10d is a flow diagram showing schematically the process of operation of a subscriber information module (SIM) held within the handset of Figure 8 in the first embodiment;
Figure 11a is a an illustrative diagram showing the stages of formation of the enciphering key by a first handset terminal of Figure 8; and
Figure 11b is a corresponding illustrative diagram showing the process of formation of the enciphering key at a second such handset;
Figure 12 is a flow diagram modifying the operation of that of Figure 10c in a third embodiment of the invention;
Figure 13b is a flow diagram modifying the operation of that of Figure 10d in the third embodiment;
Figure 14 is a flow diagram illustrating schematically the stages of security provided in a fourth embodiment of the invention;
Figure 15a is a block diagram showing schematically some of the functional elements present in the handset of Figure 8 according to the fourth embodiment of the invention;
Figure 15b is a block diagram showing schematically some of the functional elements present in the database station of the fourth embodiment;
Figure 15c is a block diagram showing schematically some of the functional elements present in the earth station of the fourth embodiment;
Figure 16a (incorporating parts of Figure 10a) is a flow diagram showing schematically the operation of a handset according to the fourth embodiment;
Figure 16b (incorporating parts of Figure 10b) is a flow diagram showing schematically the process of operation of an earth station according to the fourth embodiment;
Figure 16c (incorporating parts of Figure 10c) is a flow diagram showing schematically the operation of a database station according to the fourth embodiment; and
Figure 16d (incorporating parts of Figure 10d) is a flow diagram showing schematically the operation of a subscriber information module according to the fourth embodiment.

### PREFERRED EMBODIMENT

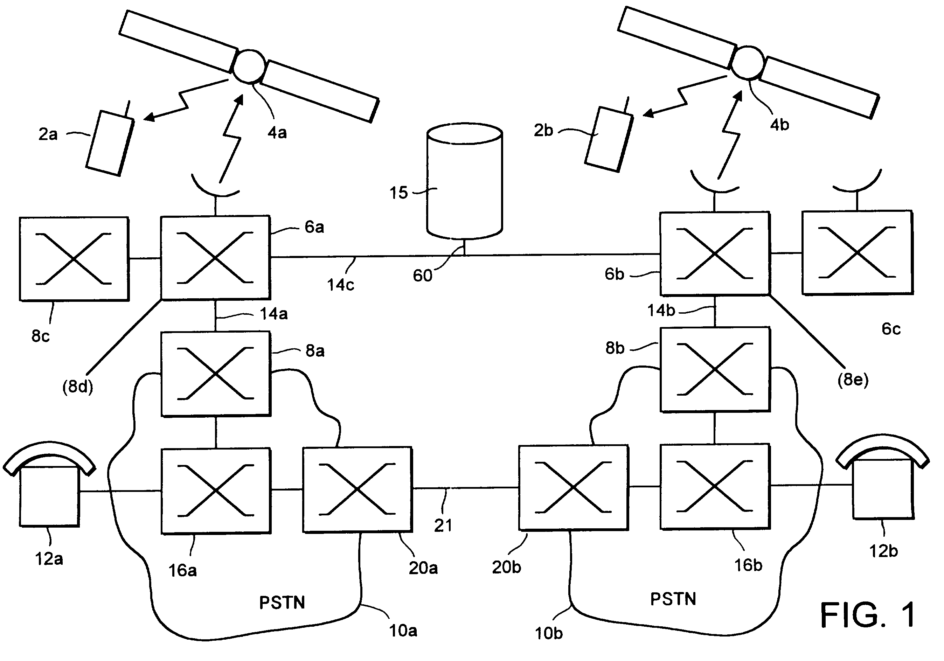

Referring to Figure 1, a satellite communications network according to this embodiment comprises mobile user terminal equipment 2a,2b; orbiting relay satellites 4a,4b; satellite earth station nodes 6a,6b; satellite system gateway stations 8a,8b; public switched telecommunications networks 10a,10b; and fixed telecommunications terminal equipment 12a,12b.

Interconnecting the satellite system gateways 8a,8b with the earth station nodes 6a,6b, and interconnecting the nodes 6a,6b with each other, is a dedicated ground-based network comprising channels 14a,14b,14c. The satellites 4, earth station nodes 6 and lines 14 make up the infrastructure of the satellite communications network, for communication with the mobile terminals 2, and accessible through the gateway stations 8.

A terminal location database station 15 is connected, via a signalling link 60 (e.g. within the channels 14 of the dedicated network) to the gateway station and earth stations 6.

The PSTNs 10a,10b comprise, typically, local exchanges 16a,16b to which the fixed terminal equipment 12a,12b is connected via local loops 18a,18b; and international switching centres 20a,20b connectable one to another via transnational links 21 (for example, satellite links or subsea optical fibre cable links). The PSTNs 10a,10b and fixed terminal equipment 12a,12b (e.g. telephone instruments) are well known and almost universally available today.

Each mobile terminal apparatus is in communication with a satellite 4 via a full duplex channel (in this embodiment) comprising a down link channel and an up link channel, for example (in each case) a TDMA time slot on a particular frequency allocated on initiation of a call, as disclosed in UK patent applications GB 2288913 and GB 2293725. The satellites 4 in this embodiment are non geostationary, and thus, periodically, there is hand over from one satellite 4 to another.

### Mobile terminal 2

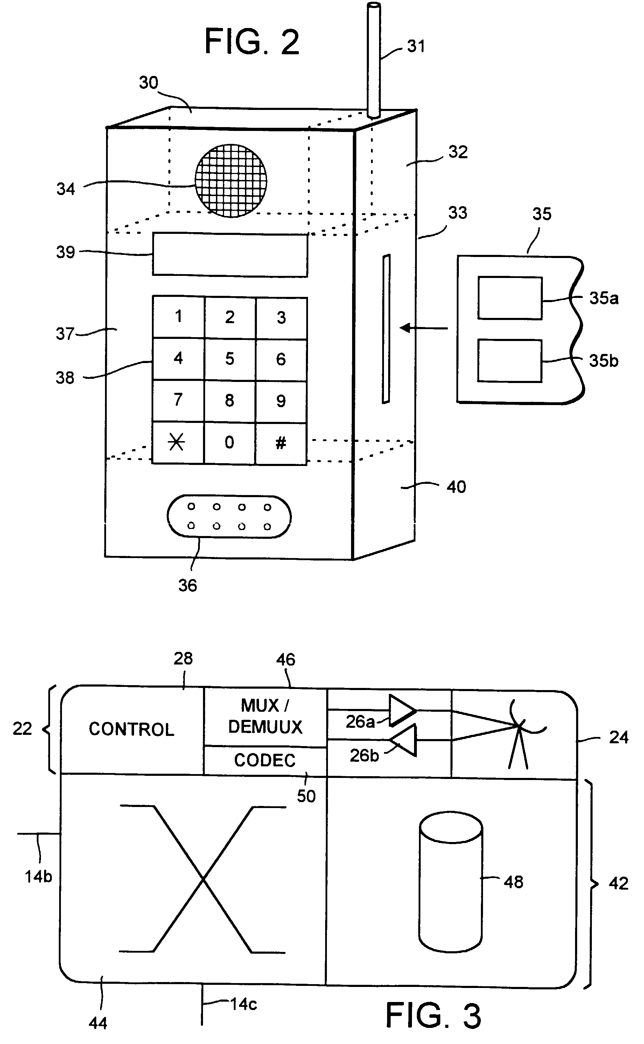

Referring to Figure 2, the mobile terminal equipment of Figure 1 is shown.

One suitable form is a handset, as shown. Details of the handsets 2a,2b etc do not form part of the present invention, but they may comprise handsets similar to those presently available for use with the GSM system, comprising a digital coder/decoder 30, together with conventional microphone 36, loudspeaker 34, battery 40 and keypad components 38, and a radio frequency (RF) interface 32 and antenna 31 suitable for satellite communications. Preferably a display 39 (for example a liquid crystal display) is also provided. A 'smart card' reader 33 receiving a smart card (SIM) 35 storing user information is also provided.

The coder/decoder (codec) 30 comprises a low bit rate coder, generating a speech bit stream at around 3.6 kilobits per second, together with a channel coder applying error correcting encoding, to generate an encoded bit stream at a rate of 4.8 kilobits per second. The low bit rate coder may, for example, be a linear predictive coder such as a multiple pulse predictive coder (MPLPC) a code book excited linear predictive coder (CELP), or a residual excited linear predictive coder (RELP). Alternatively, it may employ some form of waveform coding such as subband coding.

The error protection encoding applied may employ block codes, BCH codes, Reed-Solomon codes, turbo codes or convolutional codes. The codec 30 likewise comprises a corresponding channel decoder (e.g. using Viterbi or soft decision coding) and speech decoder.

Also provided is a control circuit 37 (which may in practice be integrated with the coder 30) consisting of a suitably programmed microprocessor, microcontroller or digital signal processor (DSP) chip.

The SIM 35 preferably complies with GSM Recommendations 02.17 "Subscriber Identity Modules", and 11.11 and is preferably implemented as an industry standard "Smart Card". The SIM 35 and reader 33 are therefore preferably as described in International Standards ISO 7810, 7811 and 7816; these and GSM 02.17 and 11.11 are all incorporated herein by reference.

Specifically, the SIM 35 includes a processor 35a and permanent memory 35b. The processor 35a is arranged to perform some encryption functions as described in greater detail below.

### Earth Station Node 6

The earth station nodes 6 are arranged for communication with the satellites.

Each earth station node 6 comprises, as shown in Figure 3, a conventional satellite earth station 22 consisting of at least one satellite tracking antenna 24 arranged to track at least one moving satellite 4, RF power amplifiers 26a for supplying a signal to the antenna 24, and 26b for receiving a signal from the antenna 24; and a control unit 28 for storing the satellite ephemeris data, controlling the steering of the antenna 24, and effecting any control of the satellite 4 that may be required (by signalling via the antenna 24 to the satellite 4).

The earth station node 6 further comprises a mobile satellite switching centre 42 comprising a network switch 44 connected to the trunk links 14 forming part of the dedicated network. A multiplexer 46 is arranged to receive switched calls from the switch 44 and multiplex them into a composite signal for supply to the amplifier 26 via a low bit-rate voice codec 50. Finally, the earth station node 6 comprises a local store 48 storing details of each mobile terminal equipment 2a within the area served by the satellite 4 with which the nodes 6 is in communication.

### Gateway 8

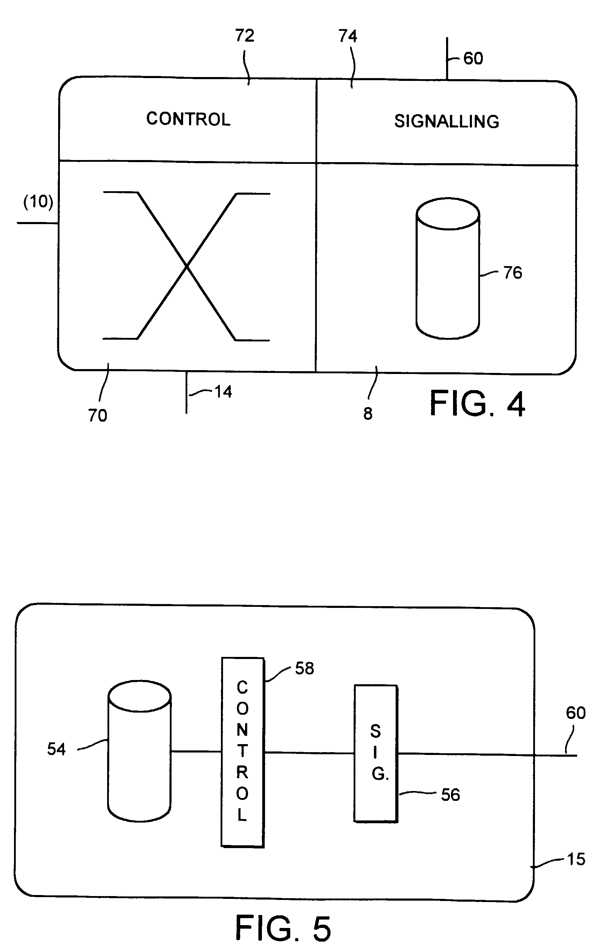

Referring to Figure 4, the gateway stations 8a,8b comprise, in this embodiment, commercially available mobile switch centres (MSCs) of the type used in digital mobile cellular radio systems such as GSM systems. They could alternatively comprise a part of an international or other exchange forming one of the PSTNs 10a,10b operating under software control to interconnect the networks 10 with the satellite system trunk lines 14.

The gateway stations 8 comprise a switch 70 arranged to interconnect incoming PSTN lines from the PSTN 10 with dedicated service lines 14 connected to one or more Earth station nodes 6, under control of a control unit 72. The control unit 72 is capable of communicating with the data channel 60 connected to the database station 15 via a signalling unit 74, and is arranged to generate data messages in some suitable format (e.g. as packets or ATM cells).

Also provided in the gateway stations 8 is a store 76 storing billing, service and other information relating to those mobile terminals 2 for which the gateway station 8 is the home gateway station. Data is written to the store 76 by the control unit 72 after being received via the signalling unit 74 or switch 70, from the PSTN 10 or the Earth station nodes 6 making up the satellite network. This store acts in the manner of a visiting location register (VLR) of a terrestrial GSM network, and a commercially available VLR may therefore be used as the store 76.

The satellite system trunk lines 14 comprise, in this embodiment, high quality leased lines meeting acceptable minimum criteria for signal degradation and delay. In this embodiment, all the lines 14 comprise terrestrial links. The trunk lines 14 are preferably dedicated lines, so that the lines 14 form a separate set of physical channels to the networks 10. However, the use of virtual circuits through the networks 10 is not excluded.

### Database Station 15

Referring to Figure 5 the database station 15 comprises a digital data store 54, a signalling circuit 56, a processor 58 interconnected with the signalling circuit 56 and the store 54, and a signalling link 60 interconnecting the database station 15 with the gateway stations 8 and Earth stations 6 making up satellite system network, for signalling or data message communications.

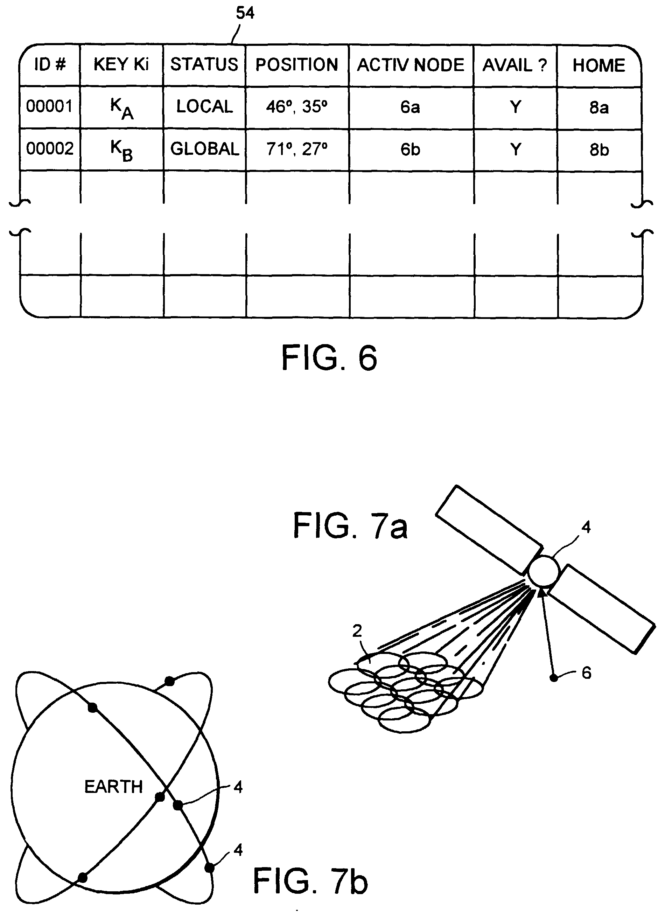

The store 54 contains, for every subscriber terminal apparatus 2, a record showing the identity (e.g. the International Mobile Subscriber Identity or IMSI); the current status of the terminal 2 (whether it is "local" or "global" as will be disclosed in greater detail below); the geographical position of the mobile terminal 2 (either in co-ordinate geometry, or as code identifying an area within which it lies); the "home" gateway station 8 with which the apparatus is registered (to enable billing and other data to be collected at a single point) and the currently active Earth station node 6 with which the apparatus 2 is in communication via the satellite 4. The contents of the store are indicated in Figure 6.

Further, in this embodiment the store contains for each user a unique and individual enciphering key Kᵢ, to be used as described below.

The signalling unit 56 and processor are arranged to receive interrogating data messages, via the signalling circuit 60 (which may be a packet switched connection), from gateways 8 or nodes 6, comprising data identifying one of the mobile terminals 2 (for example, the telephone number of the equipment 2), and the processor 58 is arranged to search the store 54 for the status and active earth station node 6 of the terminal 2 and to transmit these in a reply message via the data line 60.

Thus, in this embodiment the database station 15 acts to fulfil the functions both of a home location register (HLR) of a GSM system, and of an authentication centre (AuC) of a GSM system, and may be based on commercially available GSM products.

### Satellites 4

The satellites 4a,4b comprise generally conventional communications satellites, such as the known Hughes HS 601 model, and may be as disclosed in GB 2288913. Each satellite 4 is arranged to generate an array of beams covering a footprint beneath the satellite, each beam including a number of different frequency channels and time slots, as described in GB 2293725 and illustrated in Figure 7a.

The satellites 4a are arranged in a constellation in sufficient numbers and suitable orbits to cover a substantial area of the globe (preferably to give global coverage) for example 10 (or more) satellites may be provided in two (or more) mutually orthogonal intermediate circular orbits at an altitude of, for example, 10,500 kilometres as shown in Figure 7b. Equally, however, larger numbers of lower satellites may be used, as disclosed in EP 0365885, or other publications relating to the Iridium system, for example.

### Registration and Location

In one embodiment, a customer mobile terminal apparatus 2 may be registered with one of two distinct statuses; "local" in which the mobile terminal apparatus is permitted only to communicate through one local area, or part of the satellite system network, and "global", which entitles the apparatus to communicate through any part of the satellite system network.

The status of each apparatus 2 (i.e. "local" or "global") is stored in the record held for the apparatus 2 concerned in the store 54 of the database station 15.

The mobile terminal apparatus 2 performs an automatic registration process, of the kind well known in the art of cellular terrestrial communications, on each occasion when the terminal 2 is utilised for an outgoing call; and/or when the apparatus 2 is switched on; and/or periodically whilst the apparatus 2 is switched on. As is conventional, the registration process takes the form of the broadcasting of a signal identifying the mobile terminal 2 (e.g. by transmitting its telephone number on a common hailing or signalling frequency).

The transmitted signal is picked up by one or more satellites 4. Under normal circumstances, the signal is picked up by multiple satellites 4, and the received signal strength and/or time of arrival are transmitted, together with the identity of the mobile apparatus 2 and of the satellite 4 receiving the signal, to the database station 15 via the earth stations node or nodes 6 for which the satellites 4 are in communications, and the signalling line 60.

The processor 58 of the database station 15 then calculates, e.g. on the basis of the differential arrival times, the terrestrial position of the mobile terminal apparatus 2, which is stored in the database 54. Also stored is the identity of the earth station node 6 most suitable for communicating with the mobile terminal apparatus 2 (the "active" station). This is typically found by the processor 58 comparing the stored position of the terminal 2 with the predetermined stored positions of each of the earth station nodes 6 and selecting the nearest. However, account may also or instead be taken of the strength of the signals received via the satellites 4, or of other factors (such as network congestion) to result, in borderline cases, in the choice of a node earth station which is not geographically closest to the mobile terminal equipment 2. The identity of the allocated active earth station node 6 is then likewise stored in the store 54 in the record for that terminal apparatus.

### CALL SET UP AND ROUTING

The processes of routing calls to and from mobile terminal apparatus 2 are described fully in GB-A-2295296 or PCT/GB95/01087, both of which are hereby incorporated fully by reference. Briefly, for a local user outside its area, a call placed to the user or from the user is referred to the database station which determines that the user is outside of its area and thereafter does not process the call. For a local user which is inside its area, in the preferred embodiment described in the above referenced British and International application, calls to or from the user are set up over the satellite link, via the active earth station 6, the ground network, and the international public switch telephone network (PSTN) from the nearest gateway 8 to the terrestrial user.

For global users, calls are routed via the satellite and the active earth station, then via the ground network to the gateway station 8 nearest to the terrestrial user.

The dial numbers allocated to mobile users may have "International" prefixes followed by a code corresponding to the satellite service network. Alternatively, they could have a national prefix followed by a regional code assigned to the satellite service.

Calls between one mobile user and another are carried out by directing the signal via a first satellite link down to the active earth station node of the first mobile user, via the ground network to the active earth station node of the second mobile user (which may be, but is not necessarily, the same as that of the first) and then via a second satellite link (which may, but does not need to be via the same satellite) to the second mobile user.

### FIRST EMBODIMENT

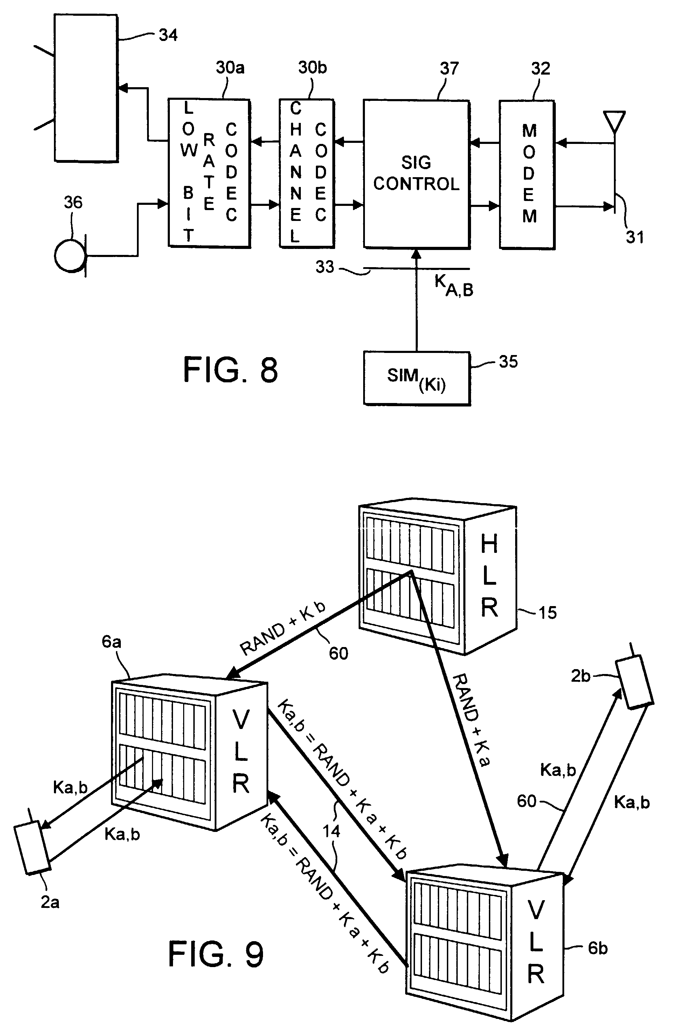

Figure 8 shows in greater detail the signal flow through the elements of the mobile terminal of Figure 2. Signals received from the ariel 31 are RF demodulated by RF modem 32 and supplied to the processor circuit 37 which is arranged, when in enciphering mode, to decipher the received data using, for example, the A5 algorithm in accordance with a deciphering key supplied from the SIM 35. The deciphering key is referred to as K_{a,b}.

The deciphered bit stream is then passed to a channel codec 30b which performs error correcting decoding and the error corrected speech signal is supplied to low bit rate codec 30a which includes a digital to analog converter, the analog output of which is supplied to loudspeaker 34.

Speech from the microphone 36 is supplied to the low bit rate codec 30a which includes an analog to digital converter, and the resulting low bit rate speech signal is encoded by the channel codec 30b to include error protection. The error protected bit stream is then encrypted, when in enciphering mode, by the control circuit 37 and the encrypted bit stream is supplied to the RF modem 32 for transmission from the aerial 31.

Referring to Figures 9, 10 and 11, the process of setting up the enciphered mode of communication will now be described in greater detail.

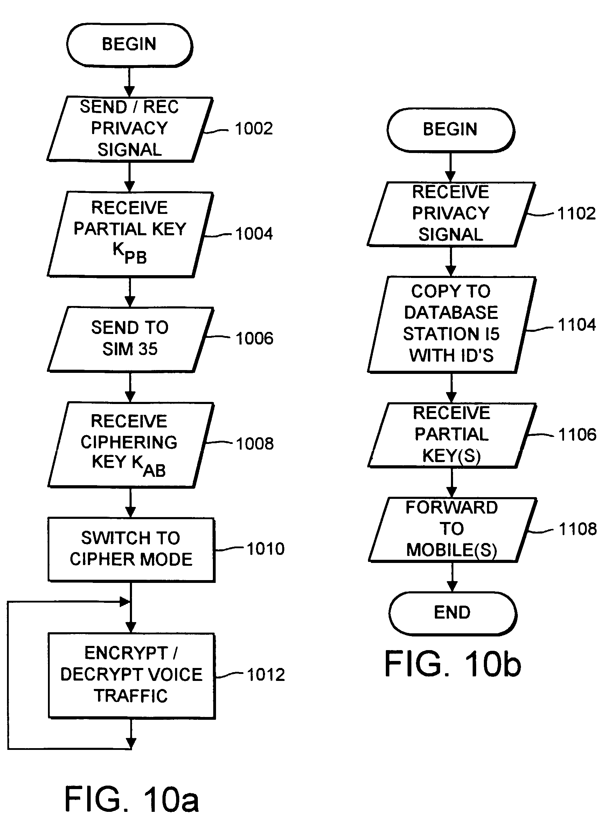

During a communication session between two user terminals 2a,2b, a user of one or both terminals elects to continue the conversation in encrypted form. Accordingly, referring to Figure 10a, in step 1002 the invoking party enters a sequence of key strokes from the keyboard 38 which is recognised by the processor 37 as an instruction to invoke security and accordingly the processor 37 transmits, in step 1002, a signal to invoke enciphering on an inband or associated control channel.

Referring to Figure 10b, at the earth station 6, in step 1102 the privacy request signal is received and in step 1104 the signal is sent in parallel to the central database station 15 (with the identity codes indicating the identities of the terminals 2a and 2b) and to the second user terminal 2b.

At the second user terminal 2b, receipt of the privacy signal occurs in step 1002 of Figure 10a.

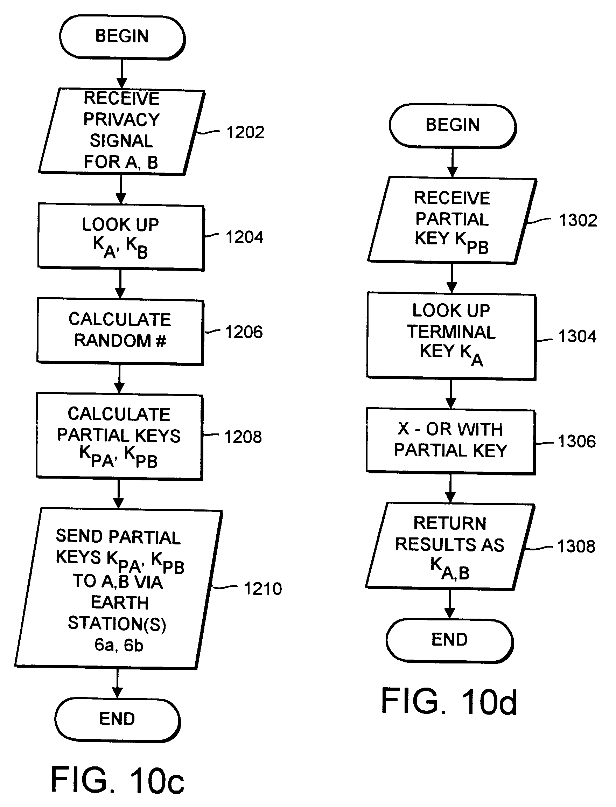

Referring to Figure 10c, at the central database station the privacy signal is received in step 1202.

In step 1204, the controller 58 of the database station 15 accesses the memory 54 and reads out the individual enciphering key Kₐ stored for the first mobile terminal 2a, and the key K_{b} stored for the second mobile terminal 2b.

In step 1206, the controller 58 generates a pseudo random number (RAND).

In this embodiment, the keys Kₐ and K_{b} are each 128 bit binary numbers and the random number RAND is another 128 bit binary number.

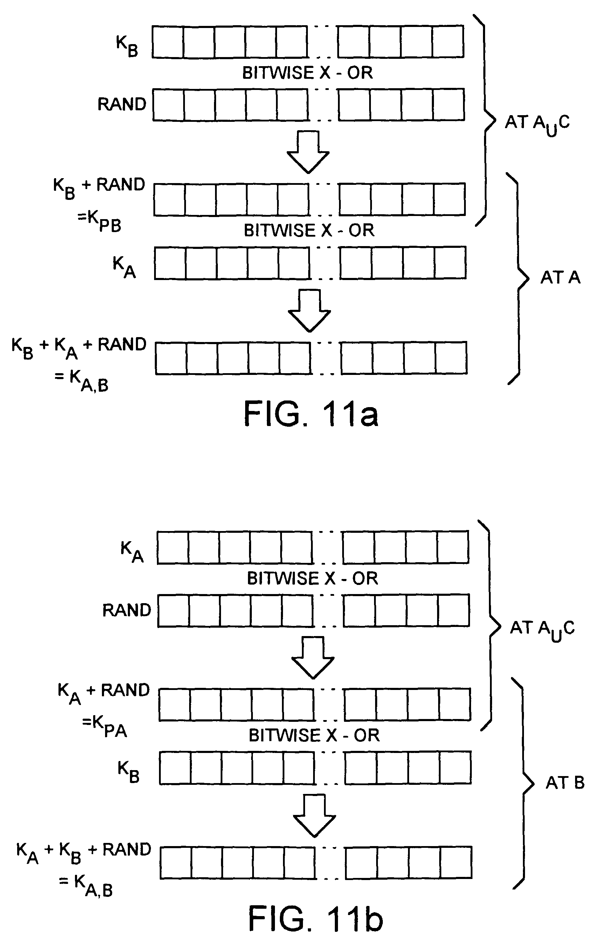

In step 1208, the controller 58 calculates first and second partial keys Kₚₐ, K_{pb}. The calculation of the second partial key is illustrated in Figure 11a; this calculation comprises generating a 128 bit number each bit of which comprises the exclusive OR function of the bits in corresponding positions of the second terminal key K_{b} and the random number RAND. Thus, the second partial key K_{pb} is equal to K_{b} + RAND (where + indicates the exclusive-OR operation for binary numbers).

The first partial key Kₚₐ is calculated in exactly the same way, by performing a bit-wise exclusive-OR operation between the first terminal key Kₐ and the random number RAND, as shown in Figure 10b.

In step 1210, the central database station 15 transmits the first partial key (Kₚₐ), to the second terminal 2b and the second partial key (K_{pb}) to the first terminal 2a, via the signalling network 60, and the respective earth stations 6b and 6a and satellites 4b and 4a.

At this stage, each individual terminal key has been "scrambled" by the exclusive OR operation with the random number RAND. An unauthorised eavesdropper who monitors one of the partial keys cannot learn the terminal key from it from because he faces two unknowns; the random number RAND and the terminal key. Even an unauthorised eavesdropper who monitors both partial keys cannot derive either the random number or one of the terminal keys, because he has only two data from which to derive three unknowns; the best that can be derived is the difference between the two terminal keys, which is of no value.

Referring now to Figure 10b, in step 1106 each earth station receives the partial key and forwards it to the mobile terminal in step 1108.

Referring to Figure 10a, in step 1004, each of the mobile terminals receives a corresponding partial key. In step 1006, the partial key is transmitted via the card reader 33 to the SIM 35.

Referring to Figure 10d, in step 1302, the SIM receives the partial key and in step 1304 the SIM reads the terminal key from within the memory 35b. In step 1306, the SIM processor 35a calculates the enciphering key, by performing a bit wise exclusive-OR operation between the received partial key and the stored terminal key to generate a new 128 bit binary number. In step 1308, the SIM 35 supplies the enciphering key thus calculated (termed K_{a,b}) via the card reader device 33 to the terminal processor 37.

It will be recalled that the partial key supplied to the first terminal 2a comprised the product of an exclusive-OR function between the terminal key K_{b} of the second terminal 2b and the random number RAND (K_{pb}=K_{b}+RAND). Thus, as shown in Figure 10a, the enciphering key calculated in step 1306, as the product of an exclusive-OR operation between this partial key K_{pb} and the terminal key Kₐ, is K_{ab}=K_{b}+RAND+Kₐ.

Likewise, at the second terminal 2b, as shown in Figure 10b, the enciphering key K_{ab} calculated is the product of the exclusive-OR operation between the partial key Kₚₐ and the terminal key K_{b}; in other words, K_{ab}=Kₐ+RAND+K_{b}.

Since the exclusive-OR operation obeys the associative law of mathematics, these two results are identical; in other words, each terminal calculates the same enciphering key.

Referring back to Figure 10a, in step 1008 the terminal processor 37 receives the encryption key K_{ab} and in step 1010 the terminal 37 switches to encryption mode. Thereafter, as shown in step 1012, the processor 37 functions to encrypt the bit stream from the codec 30 prior to RF modulation and transmission, and to decrypt the corresponding bit stream from the RF modem 32 prior to supply thereof to the codec 30.

The encryption algorithm may be any suitable algorithm and may be openly known (since the encryption key itself is secret). In particular, conveniently the encryption algorithm is the AS encryption algorithm used in GSM handsets and described in the above referenced Recommendations; this is already present in most GSM handsets.

Thus, to recap, as shown in Figure 9, in this embodiment each terminal 2 has an associated unique terminal key which is stored in the SIM 35 held within the terminal and in the central database station 15. The enciphering key used is a function of both terminal keys. The database station 15 distributes to one terminal 2 the terminal key of the other terminal.

The terminal keys are distributed in masked form. The masking in this embodiment takes the form of an exclusive-OR operation with a random number. The operation performed at each terminal to combine its own terminal key with the other, masked, terminal key results in each terminal producing an encrypted terminal key which is the same function of both terminal keys. This is conveniently arranged in this embodiment by processing each terminal key in accordance with the same terminal number.

Transmitting the terminal keys in masked form prevents an eavesdropper from gaining access to either terminal key. By changing the masking on each session operation (e.g. by generating a continually changing sequence of pseudo-random numbers) an eavesdropper cannot learn the masking function over time.

Nor is it possible for either terminal or SIM to work out the other's terminal key, since this is masked even from the terminals themselves.

Finally, as in GSM systems, neither terminal knows its own terminal key, because it is stored on the SIM, to which access is denied from the terminal. This is important since, otherwise, one terminal could in principle listen to the partial key sent to the other terminal and, knowing its own terminal key, derive the random number from which it could then decipher the other terminal key from the partial key transmitted to it.

### SECOND EMBODIMENT

In a second embodiment, security is further improved by reducing the opportunities for unauthorised tampering at the central database station. The second embodiment works substantially as the first except that, as shown in Figure 11, instead of steps 1204 to 1210 of Figure 10c being performed, steps 1404 to 1420 are performed.

Accordingly, after step 1202, the processor 58 first accesses the first terminal key Kₐ in step 1404; then calculates the random number in step 1406 (as described above in relation to step 1206 ); then calculates the first partial key in step 1408 (as described above in relation to step 1208); then sends the first partial key in step 1410 (as described above in relation to step 1210).

After these operations, any locally stored copies of Kₐ and Kₚₐ are erased. Then, in step 1414, the processor 58 accesses the second terminal key K_{b}, calculates the second partial key (step 1416); sends the second partial key (step 1418); and erases the second partial key and second terminal key (step 1420).

Thus, in this embodiment, access to the two partial keys and terminal keys is separated in time, reducing the possibilities for eavesdropping or fraudulent use of the database station 15.

It will be apparent that access to the two partial keys and/or terminal keys could be separated in other manners; for example, by sending the two terminal keys to physically separate devices and then sending the random number to each of the devices for combination there with the terminal keys.

Rather than sending the same random number to two different devices, for additional security, two identical, in-step, random number generators may be provided at two different locations, to which the two terminal keys are sent. Thus, access to the two terminal keys and/or partial keys may be separated physically as well as, or instead of, in time.

### THIRD EMBODIMENT

In the above embodiments, the partial keys Kₚₐ, K_{pb} are transmitted en clair. In this embodiment, securing is further increased by enciphering each for transmission.

Although it would be possible to use a common cipher, this would be undesirable since eavesdroppers with access to the common cipher (e.g. other authorised users of the privacy service) might be able to decipher the cipher.

Equally, it is preferred not to use an air interface cipher of the type known in the GSM system because this would be open to interception in the fixed part of the network.

Accordingly, in this embodiment, the SIM 35 stores a decryption algorithm (which may conveniently be the A5 algorithm used in GSM systems) and the database station 15 is arranged to execute the corresponding encryption algorithm.

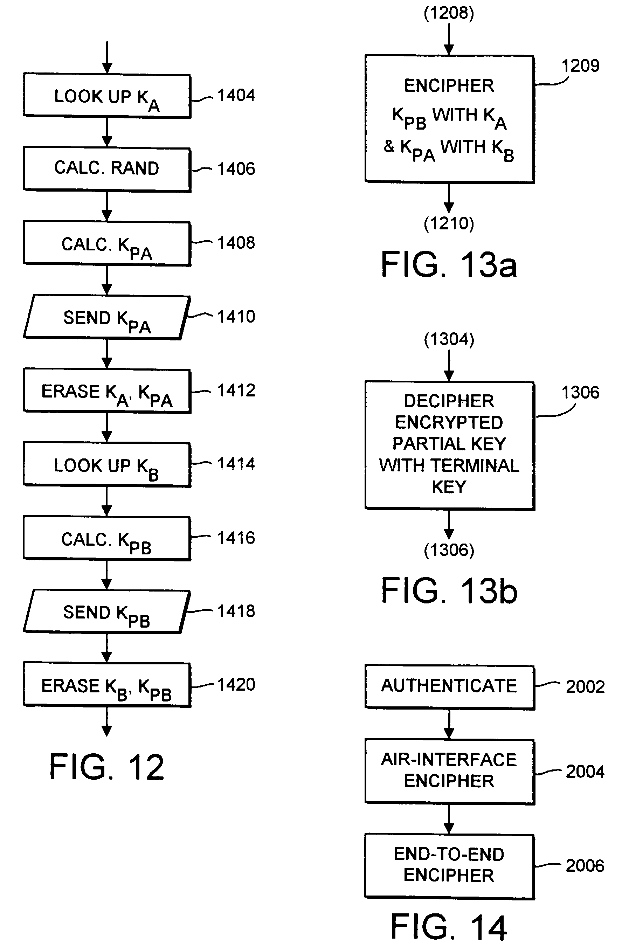

Referring to Figure 13a, in this embodiment the process of Figure 10c of the first embodiment is modified by the inclusion of a step 1209, between steps 1208 and 1210, in which each partial key is enciphered using the terminal key of the terminal to which it will be sent and is transmitted in enciphered form.

At each terminal, referring to Figure 13b, in this embodiment the SIM processor 35a performs an additional step 1305 between steps 1304 and 1306. In step 1305, the received partial key is decrypted using the terminal key, prior to calculating the ciphering key.

Thus, in this embodiment, additional security is provided by encrypting the transmitted partial keys; particular conveniently, the encryption makes use of the terminal key of the destination terminal, so to avoid the need to store further encryption data.

Obviously, however, other forms of encryption are possible; in particular, more sophisticated encryption algorithms in which an additional random number is also sent would be possible.

Finally, it may be mentioned that where the encryption scheme described in this embodiment is used, it would be possible to directly encrypt the transmitted terminal keys, rather than partial keys formed by masking the terminal keys. This should still offer good security in most circumstances, since only in the SIM 35 are the received terminal keys deciphered. However, where there is a risk that fraudulent SIMs might be manufactured then masking to produce a partial key will be employed since this conceals even from the SIM the identity of the other terminal key.

### FOURTH EMBODIMENT

In this embodiment, the principle of the first embodiment is utilised, in combination with the air interface encipherment and authentication system present in GSM compatible networks and specified in the above GSM recommendations.

Referring to Figure 14, the security features are applied in the following order:

Authentication (step 2002) ; Air-Interface encryption (step 2004); End-to-End encryption (step 2006).

Essentially, the first two steps are as in existing GSM networks and the third is as described above as in relation to the first embodiment. However, for the sake of clarity, further description will be given hereafter.

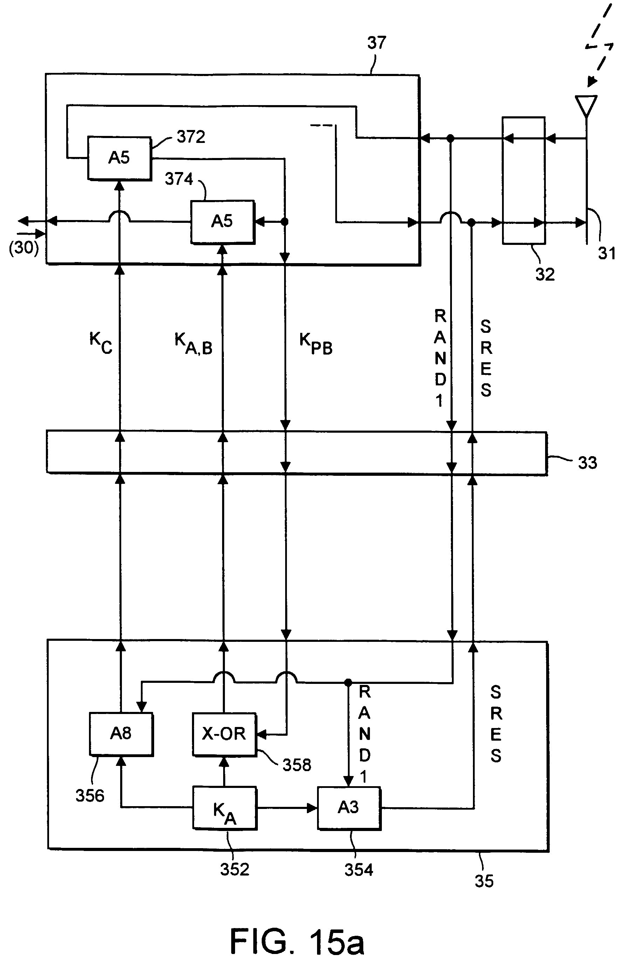

Referring to Figure 15a, the functions performed by the handset processor 37 and SIM 35 will be described as separate functional blocks; each functional block could, of course, be implemented by a separate microprocessor or digital signal processor (DSP) device but in this embodiment, in fact, only one such processor device is present in the handset and one in the SAN 35.

Referring to Figure 15a, signals received from the antenna 31 and demodulated by the RF modem 32 are passed through a first enciphering/deciphering stage 372 arranged to apply the A5 algorithm known from GSM in accordance with an air interface enciphering key K_{c}, and a second enciphering/deciphering stage 374 arranged to apply a second deciphering algorithm (conveniently, again, the A5 algorithm used in the GSM system and described in the above Recommendations) deciphering in accordance with an end-to-end enciphering key K_{a,b}. The deciphered bit stream is thereafter supplied to the codec 30.

Similarly, the speech bit stream from the codec 30 passes through the two enciphering/deciphering stages 372,374 in the reverse order; for clarity, the signal path has been omitted from Figure 15a.

Within the SIM 35 is located a terminal key storage register 352 storing the terminal key Kᵢ for the terminal. The terminal key storage register 352 is connected to supply the terminal key Kᵢ to a signature calculation stage 354, arranged to calculate a "signed response" number (SRES) used to authenticate the terminal, in accordance with the A3 algorithm described in the above mentioned GSM Recommendations and used in GSM systems. The response calculation stage 354 is also connected, via the card reader device 33, to receive a random number (RAND1) from the unenciphered bit stream output from the RF modem 32.

The terminal key register 352 is also connected to supply the terminal key Kᵢ to a first key generation stage 356, which is also arranged to receive the random number (RAND 1) and to calculate therefrom an air interface enciphering key K_{c} in accordance with the A8 algorithm described in the above GSM Recommendations and used in GSM systems. The key thus calculated is supplied, via the card reader device 33, to the first (air interface) enciphering/deciphering stage 372 of the terminal processor 37.

The terminal key register 352 is also connected to supply the terminal key to a second key generation stage 358, which is arranged to generate an enciphering key K_{ab} for end-to-end encryption (as described in the first embodiment above) utilising the terminal key Kᵢ and the partial key K_{pb} which it is connected to receive (via the card reader device 33) from the deciphered output of the first (air interface) enciphering/deciphering stage 372 of the terminal processor 37.

The end-to-end enciphering key thus calculated is supplied to the second (end-to-end) enciphering/ deciphering stage 374 of the terminal processor 37.

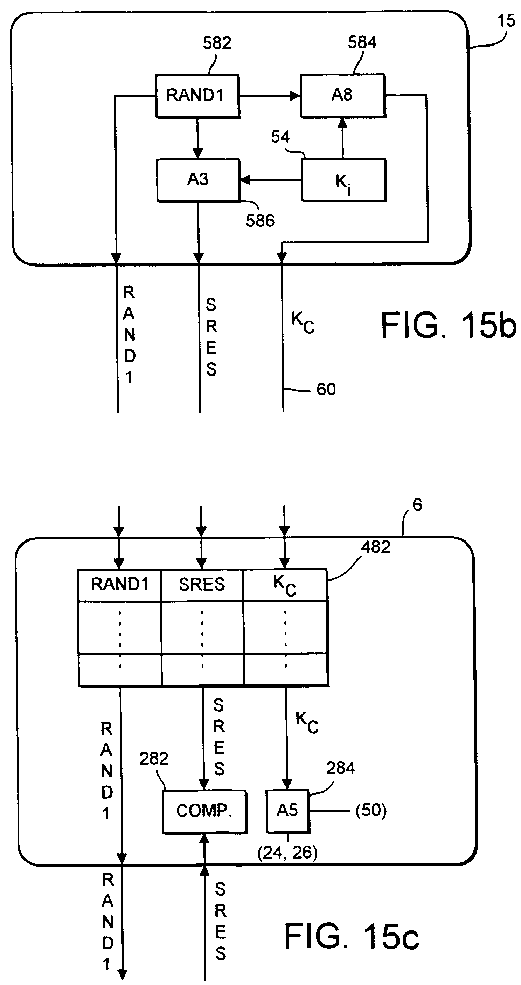

Referring to Figure 15b, the central database station comprises, in this embodiment, a random number generator 582 arranged to generate, on each occasion of use, a new binary 128 bit number (RAND1) in a random sequence; a store 54 storing the terminal keys Kᵢ; a key generation stage 584 which is connected to receive a terminal key from the store 54, and the random number (RAND1), and to calculate therefrom an air interface enciphering key K_{c} in accordance with the A8 algorithm (described in the above GSM recommendations and used in GSM systems); and a signature calculation stage 586, which likewise is connected to receive the terminal key and the random number, arranged to calculate the signed response number (SRES) in accordance with the A3 algorithm (described in the above mentioned GSM Recommendation and used in GSM systems).

The outputs of the random number generator stage 582, signed response generator stage 586 and key generation stage 584 are connected to the signalling circuit 56 for transmission to the earth stations 6.

Referring to Figure 15c, each earth station 6 comprises (within the database 48) a triplet register 482 arranged to store a predetermined number (e.g. 5) of triplets each comprising a random number, a corresponding signed response (SRES) and a corresponding air interface encryption key (K_{c}), supplied via the signalling circuit 60 from the database station 15.

On each occasion when a mobile terminal 2 registers with the earth station 6, the earth station requests the supply of the predetermined number of triplets from the central database station 15, which accordingly generates the predetermined number of triplets and transmits them for storage in the registers 482 via signalling channel 60.

Also provided within the earth station 6 is a comparator 282 coupled to the triplet register 482 and to the air interface components 24, 26 of the earth station 6, and arranged to compare a signed response (SRES) number received from a mobile terminal 2 with a signed response stored in the register 482, and to indicate correspondence (or absence thereof) between the two numbers. If the two numbers do not correspond, the user is not authenticated and service is discontinued by the control unit 28.

Finally, the earth station 6 comprises an air interface encryption stage 284 arranged to encipher and decipher in accordance with the A5 algorithm (known from GSM) making use of an air interface enciphering key K_{c} supplied from the triplet register 482.

In the enciphering direction, the air interface enciphering/deciphering stage 284 receives an input from the codec 50 and delivers its output to the air interface components 24,26; whereas in the deciphering direction the enciphering/deciphering stage 284 receives its input from the air interface components 24, 26 and delivers its output to the codec 50.

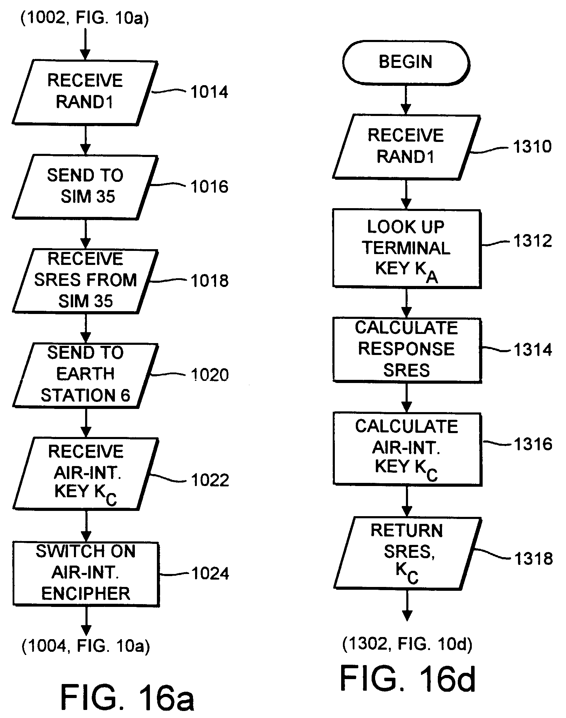

The operation of this embodiment will now be described in greater detail with reference to Figures 16a to 16d. In Figures 16a to 16d, steps of the processes of Figure 10a to 10d, which will not be discussed further in detail, are incorporated.

As in Figure 10a, a request for privacy is initiated by one of the parties and a privacy request signal is transmitted from the terminal 2a.

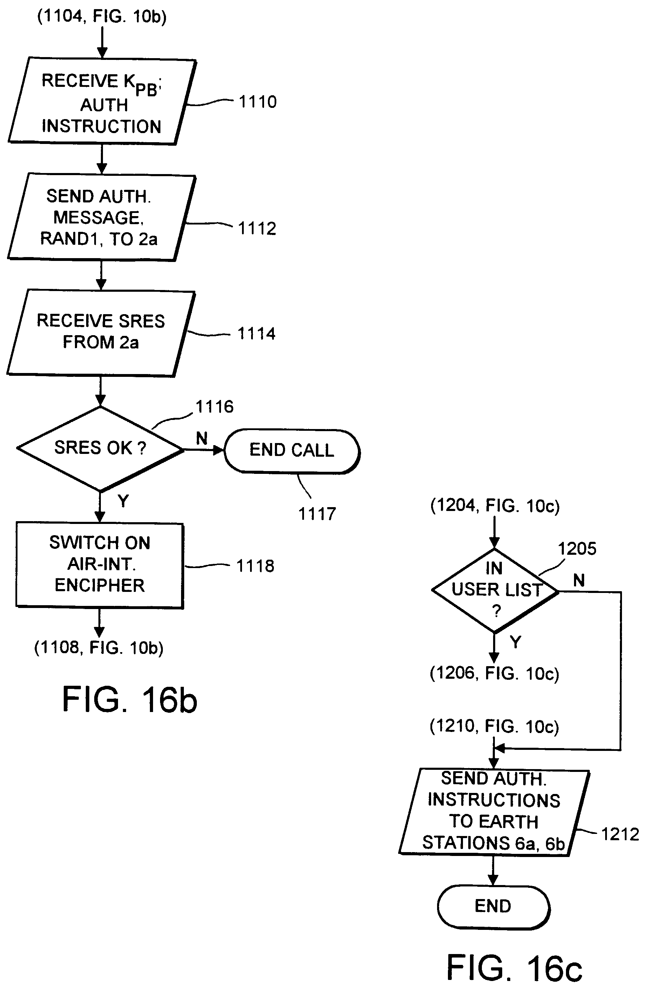

Following receipt (step 1102) of the privacy signal at the earth station 6a and forwarding thereof (step 1104) to the database station 15, referring to Figure 16c, steps 1202 and 1204 are performed to derive the terminal keys of the two terminals.

Then, in step 1205, a test is performed to determine whether both subscribers are authorised to use end-to-end encryption. If so, steps 1206 to 1210 of Figure 10c are performed. Subsequently, or if not, the database station 15 proceeds to step 1212, in which it transmits a signal to the earth station(s) 6a,6b serving the two terminals 2a,2b to instruct them to perform a terminal authentication check and to commence air interface encryption.

Referring back to Figure 16b, each earth station 6, on receipt of the instruction signal and partial key (step 1110), sends an authentication interrogation message (step 1112) which includes the next random number RAND1 obtained from the triplet register 482. Additionally, as in the GSM system, a key number may be transmitted for further verification.

Referring back to Figure 16a, on receipt of the authentication request message (step 1014) the random number (RAND1) is extracted and sent to the SIM 35 (step 1016).

Referring to Figure 16d, at the SIM 35, on receipt of the random number RAND1 (step 1310), the SIM processor 35a looks up the terminal key Kₐ, (step 1312) and calculates the signed response (SRES) using the A3 algorithm (step 1314).

In step 1316, the SIM processor 35a calculates the air interface enciphering key K_{c} using the random number (RAND1) and the terminal key Kₐ. In step 1318, the SIM 35 transmits the signed response number (SRES) and the air interface enciphering key (K_{c}) to the terminal processor 37 via the card reader device 33.

Subsequently, the SIM 35 executes the process of Figure 10d.

Referring to Figure 16a, on receipt of the signed response number (SRES) in step 1018, the terminal processor 37 transmits the SRES number to the earth station 6a (step 1020).

Referring to Figure 16b, the earth station 6 receives the signed response number (1114) and compares it with the stored signed response number held in the triplet register 482 (step 1116).

If the two do not match, then the call is terminated (step 1117). Alternatively, further attempts at authentication may be made if desired.

If the signed response received from the mobile terminal 2 matches the stored signed response in step 1116, the earth station 6 reads the enciphering key K_{c} stored in the triplet register 482 corresponding to the signed response just received, and (step 1118) commences enciphering all future traffic to, and deciphering all future traffic from, the mobile terminal 2 using the A5 algorithm together with the enciphering key K_{c}. As is conventional in GSM systems, the frame number may also be used as an input to the enciphering algorithm.

The earth station 6 thereafter returns to step 1108 of Figure 10c, to send the partial key received from the database station 15 to the terminal 2, but in this embodiment this takes place in enciphered form.

Returning to Figure 16a, on receipt of the air interface encryption key K_{c} (step 1022) from the SIM 35, the terminal processor 37 starts the enciphering/ deciphering mode in which all traffic received from the air interface modem 32 is deciphered and all traffic transmitted to the air interface modem 32 is enciphered using the A5 algorithm and the air interface enciphering key K_{c}; where the earth station 6 additionally makes use of the frame number, the terminal 2 likewise does so.

The process performed by the terminal processor 37 then returns to step 1004 of Figure 10a, to receive (in encrypted form), decrypt and use the partial enciphering key K_{pb} received from the earth station 6.

Although the above description assumes that neither terminal has recently been authenticated, and that neither terminal is already in air interface encryption mode, it will be understood that this need not be the case. If either terminal is already applying air interface encryption, then the corresponding steps described above to set up authentication and air interface enciphering are not performed again.

In the above embodiment, additional safeguards may be provided; for example, to initiate secure communications, the terminal user may be required to input a PIN code for matching with data held on the SIM.

It will be understood that, where the invention is practised in a GSM-compatible system or the like, the SIM 35 will contain further information in the form of the international mobile subscriber identity number (IMSI), and optionally lists of phone numbers for speed dial or other purposes.

The invention is conveniently practised by maintaining lists at the database station 15, each of which specifies the members of a corresponding closed user group (CUG). Members of one closed user group are thereby permitted to correspond with other members of the same user group. For example, closed user groups might comprise armed services personnel of different countries; or emergency services personnel of different countries.

### OTHER EMBODIMENTS

It will be clear from the foregoing that the above described embodiment is merely one way of putting the invention into effect. Many other alternatives will be apparent to the skilled person and are within the scope of the present invention.

For example, the numbers of satellites and satellite orbits indicated are purely exemplary. Smaller numbers of geostationary satellites, or satellites in higher altitude orbits, could be used; or larger numbers of low earth orbit (LEO) satellites could be used. Equally, different numbers of satellites in intermediate orbits could be used.

Although TDMA has been mentioned as suitable access protocol, the present invention is fully applicable to other access protocols, such as code division multiple access (CDMA) or frequency division multiple access (FDMA).

Whilst the principles of the present invention are envisaged above as being applied to satellite communication systems, the use of the invention in other communications systems (e.g. digital terrestrial cellular systems such as GSM) is also possible.

Although, for the sake of convenience, the term "mobile" has been used in the foregoing description to denote the terminals 2, it should be understood that this term is not restricted to hand-held or hand-portable terminals, but includes, for example, terminals to be mounted on marine vessels or aircraft, or in terrestrial vehicles. Equally, it is possible to practice the invention with some of the terminals 2 being completely immobile.

Instead of providing a single central database station 15 storing details of all terminal equipment 2, similar details could be stored at the home gateway 8 for all terminal equipment to register with that home gateway 8.

Equally, whilst in the above described embodiments the central database station 15 acts as a Home Location Register (HLR) of a GSM system, and may be provided using commercially available HLR hardware, and the databases within each earth station 6 act in the manner of visiting location registers (VLRs) and may likewise use commercially available GSM hardware, it will be understood that the information relating to different users could be distributed between several different databases. There could, for instance, be one database for each closed user group, at physically different positions.

Whilst in the fourth embodiment above the same terminal key Kᵢ is used for secure end-to-end encryption as is used for air interface encryption, it will be clear that this is not necessary; each terminal could store two different terminal keys, one for air interface encryption and one for end-to-end encryption. In this case, a separate authentication centre database could be provided for end-to-end encryption key distribution to that which is used in conventional air interface encryption.

Although in the foregoing embodiments, the same (A5) cipher algorithm used for the air interface encryption of the GSM system is proposed for use in end-to-end encryption, it will be apparent that a different cipher could be used; in this case, terminals would include two different enciphering stages for use in the fourth embodiment. Further, where multiple closed user groups are provided, each closed user group could use a different cipher.

In the foregoing, the gateways 8 may in fact be comprised within an ISC or exchange or mobile switching centre (MSC) by providing additional operating control programmes performing the function of the gateway.

In the foregoing, dedicated ground networks lines have been described, and are preferred. However, use of PSTN or PLMN links is not excluded where, for example, leased lines are unavailable or where temporary additional capacity is required to cope with traffic conditions.

It will naturally be clear that the stores within the gateways 8 need not be physically co-located with other components thereof, provided they are connected via a signalling link.

Whilst, in the foregoing, the term "global" is used, and it is preferred that the satellite system should cover all or a substantial part of the globe, the invention extends also to similar systems with more restricted coverage (for example of one or more continents).

Whilst the foregoing embodiments describe duplex communications systems, it will be clear that the invention is equally applicable to simplex (one way) transmission systems such as point-to-multipoint or broadcast systems.

Equally, whilst the preceding embodiments described direct transmission systems, it will be clear that the invention is applicable to store-and-forward communications systems in which one party transmits a message for storage and subsequent later delivery or transmission to the other party.

One example of such a store-and-forward system is e-mail, for example of the type provided by Compuserve (TM) or MCI (TM). Another example is the Internet, which, as is well known, consists of a number of host computer sites interconnected by a backbone of high speed packet transmission links, and accessible for file transfer from most points in the world via public telecommunications or other networks.

In an embodiment of this type, a central database station 15 need not distribute keys to both terminals at the same time; instead, distribution of the partial key to the transmitting terminal may take place at the time of transmission of a file of data for storage in encrypted form, and distribution of a partial key to the receiving terminal may take place substantially later; for example, at the next occasion when the receiving terminal is connected to the network and/or the next occasion when the receiving terminal wishes to download the file from intermediate storage in a host computer.

Naturally, it will be understood that whilst the above embodiments discuss voice transmission, the invention is applicable to the encryption of data of any kind and particularly, but not exclusively, to image data, video data, text files or the like.

It will be understood that the geographical locations of the various components of the invention are not important, and that different parts of the system of the above embodiments may be provided in different national jurisdictions. For the avoidance of doubt, the present invention extends to any part or component of telecommunications apparatus or systems which contributes to the inventive concept.

The foregoing, and all other variants, embodiments, modifications or improvements to the invention are intended to be comprised within the present invention.

## Claims

1. A method of distributing, through a communications network, enciphering key data for secure communication via said network between first and second terminals (2a,2b) each storing corresponding first and second terminal keys (Kₐ,K_{b}) comprising:
storing said first and second terminal keys (Kₐ,K_{b}) remotely to said terminals (2a,2b);
generating first and second corresponding partial keys (Kₚₐ,K_{pb}) each comprising a corresponding masking function of a corresponding one of said terminal keys (Kₐ,K_{b}); and
dispatching the first partial key (Kₚₐ) towards the second terminal (2b), and vice-versa.

2. A method according to claim 1, further comprising providing a number (RAND), and in which each masking function is a joint function of said number and a corresponding said terminal key.

3. A method according to claim 2, in which the first and second functions comprise an Exclusive-OR.

4. A method according to claim 1, in which the first and second functions are the same.

5. A method according to any preceding claim, further comprising receiving a request signal requesting enciphering.

6. A method according to claim 5 when appended to claim 2, in which said step of providing comprises providing a new said number (RAND) in response to said request signal.

7. A method according to claim 2 or any of claims 3 to 6 when appended thereto, in which said step of providing a number comprises pseudo randomly generating said number.

8. A method according to any preceding claim, further comprising a step of enciphering at least one of said first and second partial keys (Kₚₐ, K_{pb}) prior to said step of dispatching.

9. A method according to claim 8 in which each of said first and second keys is enciphered with a different cipher.

10. A method according to claim 9 in which each of said first and second keys is enciphered with a common enciphering algorithm using said first and second keys as ciphering keys.

11. A method according to any preceding claim, further comprising a step of authenticating at least one said terminal (2a,2b) through a signalling dialogue, prior to said step of dispatching.

12. A method according to any preceding claim, further comprising separating access to said partial keys and functions at the location (15) where they are generated.

13. A method of communication between two terminals (2a,2b) through a communications network comprising:
distributing enciphering key data to said first and second terminals via said network from a remote location;
using said enciphering key data to derive an enciphering key (K_{ab}) at each of said terminals (2a,2b);
enciphering data for transmission at a first said terminal (2a) ;
transmitting said enciphered data through said communications network;
receiving said enciphered data at the second terminal (2b); and
deciphering said enciphered data.

14. A method according to claim 13 in which at least one of the terminals (2a,2b) is mobile.

15. A method according to claim 13 or claim 14 in which the communications path to at least one of the terminals includes an air interface.

16. A method according to claim 15 in which said air interface includes a repeater satellite (4a,4b).

17. A method according to claim 15 in which said air interface includes a terrestrial radio link.

18. A method according to any of claims 15 to 17 in which a further stage of encryption is provided over the or each said air interface.

19. A method according to claim 13, further comprising a step of storing said data.

20. A method according to claim 19 in which said communications network comprises at least one computer via which data may be transferred in the form of message files.

21. A method of secure communication between two terminals (2a,2b) comprising providing each terminal with a terminal key (Kₐ,K_{b}) ; sending each terminal data relating to the other is terminal key; and carrying encrypted traffic from a first said terminal (2a) to a second (2b) in a cipher (K_{ab}) depending on both said terminal keys (Kₐ, K_{b}).

22. A method according to claim 21, further comprising providing storage means (15) separate from said terminals (2a,2b) storing data relating to said terminal keys, and in which the terminal keys are sent to each terminal from the storage means (15).

23. A method according to claim 22 in which said keys (Kₐ,K_{b}) are sent in encoded form (Kₚₐ,K_{pb}).

24. A method according to claim 23 comprising generating each said encoded form (Kₚₐ,K_{pb}) as the product of the corresponding terminal key and a predetermined number (RAND).

25. A method of secure communication between two mobile terminals (2a,2b) in a satellite communications system, comprising enciphering data at a first said terminal (2a), carrying said data in enciphered form on the entire path through said network to said second terminal (2b), and deciphering said data at said second terminal (2b).

26. A method of secure communication between two mobile terminals (2a,2b) each of which is connected via an air interface to a terrestrial transceiver station (6a,6b), comprising applying first encryption between each terminal (2a,2b) and the terrestrial transceiver station (6a,6b), said first encryption being applied at said transceiver station (6), and applying second encryption over the whole path through the network between said first and second terminals (2a,2b).

27. Apparatus (15) for storing enciphering key data for enabling secure communications via a network between first and second terminals (2a,2b) each storing corresponding first and second terminal keys (Kₐ,K_{b}), said apparatus comprising:
a store (54) containing said terminal keys (Kₐ,K_{b},...); and
means (56) for communicating with said network;
means (58) for sending a first said terminal key (Kₐ) to a second said terminal (2_{b}) and a second said terminal key (K_{b}) to a first said terminal (Kₐ), to enable end-to-end enciphered communications between said terminals (2a,2b).

28. Apparatus (15) according to claim 27 further comprising means (58) for masking each said terminal key (Kₐ, K_{b}...) prior to sending thereof.

29. Signal routing apparatus (6a,6b) for routing signals from a first terminal (2a) to a second terminal (2b) via a communications network, said routing apparatus comprising:
means (72) for receiving a signal indicating a requesting for end-to-end encrypted communications between said first and second terminals (2a,2b);
means (74) for indicating said request to a further station (15) holding encryption key data;
means (76) for receiving said enciphering data from said further station (15); and
means for forwarding said enciphering data to a said mobile terminal (2a).

30. A first terminal (2a) for communicating, via a communications network, with a second terminal (2b), said first terminal comprising:
a store (35b) containing a terminal key (Kₐ) for said first terminal;
a receiver port (31,32) coupled to said communications network;
a processor device (35a) coupled to said receiver port to receive therefrom data (K_{pb}) relating to a terminal key (K_{b}) held at said second terminal (2b);
a key generator (35a) arranged to calculate from said data (K_{pb}) and said terminal key of (Kₐ) said first terminal an enciphering key (K_{a,b}) depending on both said terminal keys; and
enciphering/deciphering apparatus (37) arranged to encipher and/or decipher data transmitted from and/or received at said terminal (2a) in accordance with said enciphering key (K_{a,b}).

31. Apparatus according to claim 30 in which said store (35b) and said processor device (35a) are provided within a secure device (35) which cannot be read from an external device.

32. Apparatus according to claim 31, in which said secure device (35) comprises a removable and insertable module (35).

33. Apparatus according to any of claims 30 to 32 which further comprises air interface components (31,32) for communicating via an air interface with said network.

34. Apparatus according to claim 34, in which said air interface components (31,32) are for communicating with a satellite (4a,4b).

35. Secure data storage apparatus (35) comprising a store (35b) for storing terminal key data (Kₐ) and a processor (35a) for receiving further terminal key data (K_{pb}) and for combing said further terminal key data (K_{pb}) with said stored terminal key data (Kₐ) and for generating, responsive thereto, a combined encryption key (K_{ab}).
